# EUROPEAN PATENT SPECIFICATION

(11) **EP 3 566 202 B1**
(45) Date of publication and mention of the grant of the patent: **13.09.2023**
(21) Application number: 17832868.8
(22) Date of filing: 27.12.2017
(51) Int. Cl.: G06T 5/00, G06T 5/10, G06T 5/50

(54) **IMAGE NOISE REDUCTION USING SPECTRAL TRANSFORMS**
BILDRAUSCHUNTERDRÜCKUNG UNTER VERWENDUNG SPEKTRALER TRANSFORMATIONEN
RÉDUCTION DE BRUIT D'IMAGE À L'AIDE DE TRANSFORMÉES SPECTRALES

(30) Priority: 03.01.2017 US 201762441902 P
(43) Date of publication of application: 13.11.2019
(73) Proprietor: Teledyne Flir, LLC, Wilmington, Delaware 19801 (US)
(72) Inventor: HOGASTEN, Nicholas, Goleta CA 93117 (US)
(74) Representative: Murgitroyd & Company
(86) International application number: PCT/US2017/068596
(87) International publication number: WO 2018/128896

(56) References cited:
- MAGGIONI MATTEO ET AL: "Joint Removal of Random and Fixed-Pattern Noise Through Spatiotemporal Video Filtering", IEEE TRANSACTIONS ON IMAGE PROCESSING, IEEE SERVICE CENTER, PISCATAWAY, NJ, US, vol. 23, no. 10, 1 October 2014 (2014-10-01), pages 4282-4296, XP011557818, ISSN: 1057-7149, DOI: 10.1109/TIP.2014.2345261 [retrieved on 2014-08-29]
- ZHENWANG LIU ET AL: "A Fixed-Pattern Noise Correction Method Based on Gray Value Compensation for TDI CMOS Image Sensor", SENSORS, vol. 15, no. 9, 16 September 2015 (2015-09-16), pages 23496-23513, XP055464043, DOI: 10.3390/s150923496

## Description

### TECHNICAL FIELD

The present invention relates generally to imaging and, more particularly, to image noise filtering techniques.

### BACKGROUND

In the field of image capture and processing, row and column noise is a recurring problem. In this regard, various components of imaging systems may produce some amount of noise that becomes unintentionally added to captured images. For example, certain circuit components (e.g., row or column amplifiers) may be used during the capture and readout of all pixel data associated with a given column or row. Manufacturing variations or calibration errors associated with such components can therefore affect all pixel data that is captured and read out. This can result in rows or columns of the captured images exhibiting offsets that manifest as horizontal or vertical lines. When this noise varies over time (e.g., temporal noise caused by fluctuations in temperature or other factors), it can result in flickering rows or columns.

Such noise is generally easily perceived by human observers and can therefore significantly degrade a user's experience when the images viewed in video form. However, this noise is often very difficult for machine-based processes to detect and remove in a reliable and computationally efficient manner, as such noise often affects a relatively large portion of an image (e.g., a large spatial area corresponding to an entire row or column). In this regard, it is often difficult for conventional noise reduction processes to effectively discriminate between scene-based information and temporally changing noise.

Moreover, existing noise reduction approaches often require processing of individual pixels or neighborhoods of pixels to identify noise. Unfortunately, such approaches can be extremely computationally intensive and may require realtime processing of thousands or even millions of individual pixel values. As a result, such conventional approaches are usually unsuitable for use in embedded systems where available computational power and memory may be insufficient for such processing.

Maggioni Matteo et al, "Joint Removal Of Random And Fixed-Pattern Noise Through Spatiotemporal Video Filtering", IEEE Transactions On Image Processing, IEEE Service Center, Piscataway, NJ, US, Vol. 23, No. 10, DOE10.1109/TIP.2014.2345261, ISSN 1057-7149, (20141001), pages 4282 - 4296, discloses a framework for the denoising of videos jointly corrupted by spatially correlated random noise and spatially correlated fixed-pattern noise. The approach is based on motion-compensated 3-D spatio-temporal volumes. First, the spatial and temporal correlations within each volume are leveraged to sparsify the data in 3-D spatiotemporal transform domain, and then the coefficients of the 3-D volume spectrum are shrunk using an adaptive 3-D threshold array, depending on the particular motion trajectory of the volume, the individual power spectral densities of the random and fixed-pattern noise, and also the noise variances which are adaptively estimated in transform domain.

### SUMMARY

Improved techniques for image noise reduction are provided using spectral transforms. By applying spectral transforms to row and column values associated with captured image frames, basis function components associated with noise may be selectively reduced to provide adjusted row and column values. The adjusted row and column values may be used to generate row and column offset terms to effectively filter out the noise from the captured images in an efficient and effective manner.

According to a first aspect, there is provided a method according to claim 1.

According to a second aspect, there is provided a system according to claim 6.

A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 illustrates a block diagram of an imaging system in accordance with an embodiment of the disclosure.
Fig. 2 illustrates a block diagram of an image capture component in accordance with an embodiment of the disclosure.
Fig. 3 illustrates a process of reducing row and column noise in accordance with an embodiment of the disclosure.
Fig. 4 illustrates a set of captured image frames with associated row mean values and associated column mean values in accordance with an embodiment of the disclosure.
Fig. 5 illustrates a captured image frame with associated row mean values and associated column mean values in accordance with an embodiment of the disclosure.
Fig. 6 illustrates row mean values in accordance with an embodiment of the disclosure.
Fig. 7 illustrates first spectral coefficients following the performance of first spectral transforms accordance with an embodiment of the disclosure.
Fig. 8 illustrates second spectral coefficients following the performance of second spectral transforms in accordance with an embodiment of the disclosure.
Fig. 9 illustrates noise coefficients in accordance with an embodiment of the disclosure.
Fig. 10 illustrates adjusted second spectral coefficients in accordance with an embodiment of the disclosure.
Fig. 11 illustrates adjusted row mean values in accordance with an embodiment of the disclosure.

Embodiments of the present invention and their advantages are best understood by referring to the detailed description that follows. It should be appreciated that like reference numerals are used to identify like elements illustrated in one or more of the figures.

### DETAILED DESCRIPTION

Various techniques are provided to remove spatially correlated temporal row and column noise from image frames. In some embodiments, multiple image frames are captured and corresponding row and column values are determined for each image frame. In various embodiments, the row and column values may be implemented as mean row and column pixel values and/or sums of row and column pixel values, and collectively referred to as row and column vectors.

First spectral transforms are applied to subsets of the row and column values of each image frame to determine first spectral coefficients. Second spectral transforms are applied to the first set of spectral coefficients to determine second spectral coefficients. The magnitude of the second spectral coefficients is compared with magnitudes of a corresponding set of noise spectral coefficients calculated from other image frames having no scene information (e.g., only noise). Based on these comparisons, the second spectral coefficients are selectively adjusted to effectively attenuate temporal noise associated with the captured image frames.

Reverse second spectral transforms are performed on the adjusted second spectral coefficients to provide adjusted first spectral coefficients. Reverse first spectral transforms are performed on the adjusted first spectral coefficients to provide adjusted row and column values for the captured image frames. In some embodiments, multiple overlapping subsets of the adjusted row and column values may be averaged, weighted, and/or otherwise combined to determine final row and column values.

The adjusted and/or final row and column values are used to determine row and column correction terms (e.g., offsets to effectively filter out noise) that are applied to row and column pixel values of the captured image frames and thus reduce spatially correlated temporal row and column noise. By applying these techniques to the image frames of a video, row and column flickering and/or other noise may be effectively filtered and reduced. Such an approach contrasts with conventional noise filtering techniques that are often image-based and require the processing of thousands or even millions of pixel values.

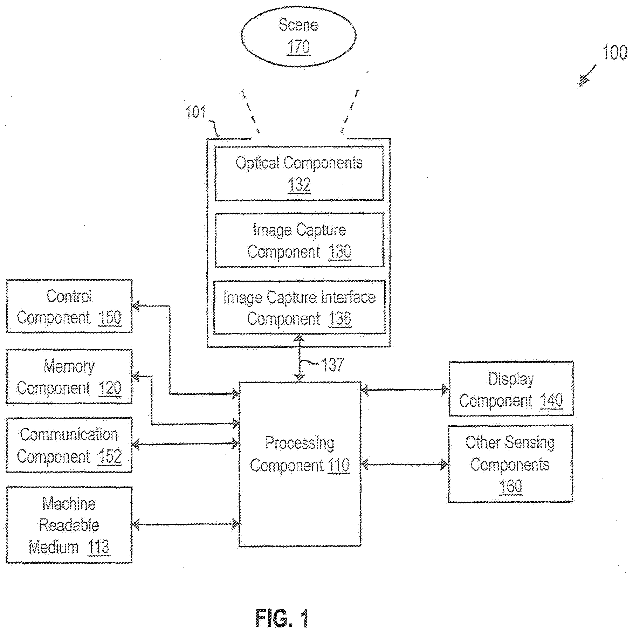

Turning now to the drawings, Fig. 1 illustrates a block diagram of an imaging system 100 in accordance with an embodiment of the disclosure. Imaging system 100 may be used to capture and process images (e.g., image frames) in accordance with techniques described herein. In some embodiments, various components of imaging system 100 may be provided in a camera component 101, such as an imaging camera. In other embodiments, one or more components of imaging system 100 may be implemented remotely from each other in a distributed fashion (e.g., networked or otherwise).

In some embodiments, imaging system 100 may be used to detect one or more gases of interest within a scene 170. For example, imaging system 100 may be configured to capture one or more images of scene 170 using camera component 101 (e.g., a thermal imaging camera) in response to infrared radiation 171 received from scene 170. Infrared radiation 171 may correspond to wavelengths that are emitted and/or absorbed by a gas 172 within scene 170, and other wavelengths that are emitted and/or absorbed by a background portion 173 of scene 170.

Captured images may be received by a processing component 110 and stored in a memory component 120. Processing component 110 may be configured to process the captured images in accordance with gas detection techniques discussed herein.

In some embodiments, imaging system 100 includes processing component 110, a machine readable medium 113, a memory component 120, image capture component 130, filters 131 (e.g., implemented by at least two sets of alternating filters 131A and 131B further discussed herein), optical components 132 (e.g., one or more lenses configured to receive infrared radiation 171 through an aperture 134 in camera component 101), an image capture interface component 136, a display component 140, a control component 150, a communication component 152, and other sensing components 160.

In some embodiments, imaging system 100 may be implemented as an imaging camera, such as camera component 101, to capture images, for example, of scene 170 (e.g., a field of view). In some embodiments, camera component 101 may include image capture component 130, optical components 132, and image capture interface component 136 housed in a protective enclosure. Imaging system 100 may represent any type of camera system which, for example, detects electromagnetic radiation (e.g., infrared radiation 171) and provides representative data (e.g., one or more still images or video images). For example, imaging system 100 may represent a camera component 101 that is directed to detect infrared radiation and/or visible light and provide associated image data.

In some embodiments, imaging system 100 may include a portable device and may be implemented, for example, coupled to various types of vehicles (e.g., an automobile, a truck, or other land-based vehicles). Imaging system 100 may be implemented with camera component 101 at various types of fixed scenes (e.g., automobile roadway, train railway, or other scenes) via one or more types of structural mounts. In some embodiments, camera component 101 may be mounted in a stationary arrangement to capture repetitive thermal images of scene 170.

In some embodiments, processing component 110 may include, for example, a microprocessor, a single-core processor, a multi-core processor, a microcontroller, a logic device (e.g., a programmable logic device configured to perform processing operations), a digital signal processing (DSP) device, one or more memories for storing executable instructions (e.g., software, firmware, or other instructions), and/or any other appropriate combinations of processing device and/or memory to execute instructions to perform any of the various operations described herein. Processing component 110 is configured to interface and communicate with the various components illustrated in Fig. 1 to perform method and processing steps as described herein. In various embodiments, it should be appreciated that processing operations and/or instructions may be integrated in software and/or hardware as part of processing component 110, or code (e.g., software or configuration data) which may be stored in memory component 120. Embodiments of processing operations and/or instructions disclosed herein may be stored by machine readable medium 113 in a non-transitory manner (e.g., a memory, a hard drive, a compact disk, a digital video disk, or a flash memory) to be executed by a computer (e.g., logic or processor-based system) to perform various methods disclosed herein.

In various embodiments, the machine readable medium 113 may be included as part of imaging system 100 and/or separate from imaging system 100, with stored instructions provided to imaging system 100 by coupling the machine readable medium 113 to imaging system 100 and/or by imaging system 100 downloading (e.g., via a wired or wireless link) the instructions from the machine readable medium (e.g., containing the non-transitory information). In various embodiments, as described herein, instructions provide for real time applications of processing various images of scene 170.

In some embodiments, memory component 120 may include one or more memory devices (e.g., one or more memories) to store data and information. The one or more memory devices may include various types of memory including volatile and non-volatile memory devices, such as RAM (Random Access Memory), ROM (Read-Only Memory), EEPROM (Electrically-Erasable Read-Only Memory), flash memory, or other types of memory. In one embodiment, processing component 110 is configured to execute software stored in memory component 120 and/or machine readable medium 113 to perform various methods, processes, and operations in a manner as described herein.

In some embodiments, image capture component 130 may include an array of sensors (e.g., any type visible light, infrared, or other type of detector) for capturing images of scene 170. In one embodiment, the sensors of image capture component 130 provide for representing (e.g., converting) a captured images of scene 170 as digital data (e.g., via an analog-to-digital converter included as part of the sensor or separate from the sensor as part of imaging system 100). As further discussed herein, image capture component 130 may be implemented as an array of infrared sensors having at least two different types of filters distributed among the various sensors of the array.

In some embodiments, processing component 110 may be configured to receive images from image capture component 130, process the images, store the original and/or processed images in memory component 120, and/or retrieve stored images from memory component 120. In various aspects, processing component 110 may be remotely positioned, and processing component 110 may be configured to remotely receive images from image capture component 130 via wired or wireless communication with image capture interface component 136, as described herein. Processing component 110 may be configured to process images stored in memory component 120 to provide images (e.g., captured and/or processed images) to display component 140 for viewing by a user.

In some embodiments, display component 140 may include an image display device (e.g., a liquid crystal display (LCD)) or various other types of generally known video displays or monitors. Processing component 110 may be configured to display image data and information on display component 140. Processing component 110 may be configured to retrieve image data and information from memory component 120 and display any retrieved image data and information on display component 140. Display component 140 may include display electronics, which may be utilized by processing component 110 to display image data and information. Display component 140 may receive image data and information directly from image capture component 130 via processing component 110, or the image data and information may be transferred from memory component 120 via processing component 110.

In some embodiments, control component 150 may include a user input and/or interface device having one or more user actuated components, such as one or more push buttons, slide bars, rotatable knobs or a keyboard, that are configured to generate one or more user actuated input control signals. Control component 150 may be configured to be integrated as part of display component 140 to operate as both a user input device and a display device, such as, for example, a touch screen device configured to receive input signals from a user touching different parts of the display screen. Processing component 110 may be configured to sense control input signals from control component 150 and respond to any sensed control input signals received therefrom.

In some embodiments, control component 150 may include a control panel unit (e.g., a wired or wireless handheld control unit) having one or more user-activated mechanisms (e.g., buttons, knobs, sliders, or others) configured to interface with a user and receive user input control signals. In various embodiments, it should be appreciated that the control panel unit may be configured to include one or more other user-activated mechanisms to provide various other control operations of imaging system 100, such as auto-focus, menu enable and selection, field of view (FoV), brightness, contrast, gain, offset, spatial, temporal, and/or various other features and/or parameters.

In some embodiments, control component 150 may include a graphical user interface (GUI), which may be integrated as part of display component 140 (e.g., a user actuated touch screen), having one or more images of the user-activated mechanisms (e.g., buttons, knobs, sliders, or others), which are configured to interface with a user and receive user input control signals via the display component 140. As an example for one or more embodiments as discussed further herein, display component 140 and control component 150 may represent appropriate portions of a tablet, a laptop computer, a desktop computer, or other type of device.

In some embodiments, processing component 110 may be configured to communicate with image capture interface component 136 (e.g., by receiving data and information from image capture component 130). Image capture interface component 136 may be configured to receive images from image capture component 130 and communicate the images to processing component 110 directly or through one or more wired or wireless communication components (e.g., represented by connection 137) in the manner of communication component 152 further described herein. Camera component 101 and processing component 110 may be positioned proximate to or remote from each other in various embodiments.

In some embodiments, imaging system 100 may include one or more other types of sensing components 160, including environmental and/or operational sensors, depending on the sensed application or implementation, which provide information to processing component 110 (e.g., by receiving sensor information from each sensing component 160). In various embodiments, other sensing components 160 may be configured to provide data and information related to environmental conditions, such as internal and/or external temperature conditions, lighting conditions (e.g., day, night, dusk, and/or dawn), humidity levels, specific weather conditions (e.g., sun, rain, and/or snow), distance (e.g., laser rangefinder), and/or whether a tunnel, a covered parking garage, or that some type of enclosure has been entered or exited. Accordingly, other sensing components 160 may include one or more conventional sensors as would be known by those skilled in the art for monitoring various conditions (e.g., environmental conditions) that may have an effect (e.g., on the image appearance) on the data provided by image capture component 130.

In some embodiments, other sensing components 160 may include devices that relay information to processing component 110 via wireless communication. For example, each sensing component 160 may be configured to receive information from a satellite, through a local broadcast (e.g., radio frequency) transmission, through a mobile or cellular network and/or through information beacons in an infrastructure (e.g., a transportation or highway information beacon infrastructure) or various other wired or wireless techniques.

In some embodiments, communication component 152 may be implemented as a network interface component (NIC) configured for communication with a network including other devices in the network. In various embodiments, communication component 152 may include one or more wired or wireless communication components, such as an Ethernet connection, a wireless local area network (WLAN) component based on the IEEE 802.11 standards, a wireless broadband component, mobile cellular component, a wireless satellite component, or various other types of wireless communication components including radio frequency (RF), microwave frequency (MWF), and/or infrared frequency (IRF) components configured for communication with a network. As such, communication component 152 may include an antenna coupled thereto for wireless communication purposes. In other embodiments, the communication component 152 may be configured to interface with a DSL (e.g., Digital Subscriber Line) modem, a PSTN (Public Switched Telephone Network) modem, an Ethernet device, and/or various other types of wired and/or wireless network communication devices configured for communication with a network.

In some embodiments, a network may be implemented as a single network or a combination of multiple networks. For example, in various embodiments, the network may include the Internet and/or one or more intranets, landline networks, wireless networks, and/or other appropriate types of communication networks. In another example, the network may include a wireless telecommunications network (e.g., cellular phone network) configured to communicate with other communication networks, such as the Internet. As such, in various embodiments, imaging system 100 and/or its individual associated components may be associated with a particular network link such as for example a URL (Uniform Resource Locator), an IP (Internet Protocol) address, and/or a mobile phone number.

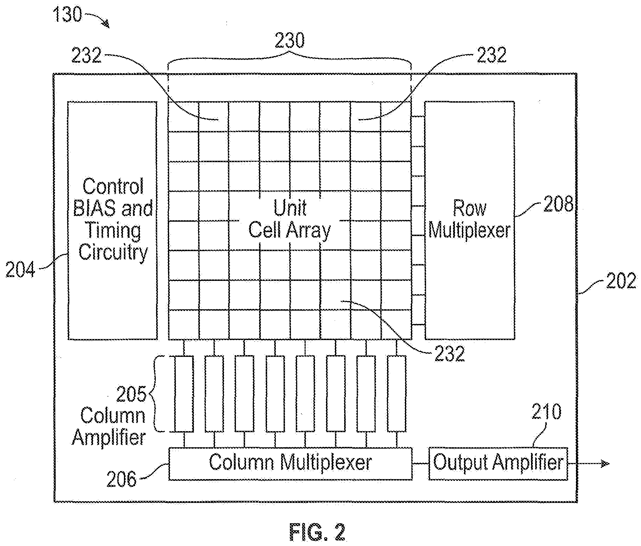

Fig. 2 illustrates a block diagram of image capture component 130 in accordance with an embodiment of the disclosure. In this illustrated embodiment, image capture component 130 is a focal plane array (FPA) including a sensor array 230 of infrared sensors 232 (e.g., implemented as unit cells) and a read out integrated circuit (ROIC) 202. Although an 8 by 8 array of infrared sensors 232 is shown, this is merely for purposes of example and ease of illustration. Any desired sensor array size may be used as desired.

Each infrared sensor 232 may be implemented, for example, by an infrared detector such as a microbolometer and associated circuitry to provide image data (e.g., a data value associated with a captured voltage) for a pixel of a captured thermal image. In this regard, time-multiplexed electrical signals may be provided by the infrared sensors 232 to ROIC 202. As further discussed herein, infrared sensors 232 may be associated with corresponding filters to permit at least two differently filtered images to be captured.

ROIC 202 includes bias generation and timing control circuitry 204, column amplifiers 205, a column multiplexer 206, a row multiplexer 208, and an output amplifier 210. Images captured by infrared sensors 232 may be provided by output amplifier 210 to processing component 110 and/or any other appropriate components to perform various processing techniques described herein. Further descriptions of ROICs and infrared sensors (e.g., microbolometer circuits) may be found in U.S. Patent No. 6,028,309 issued February 22, 2000.

As discussed, various techniques are provided to remove spatially correlated temporal row and column noise from image frames. Although the techniques provided herein are discussed primarily in relation to rows, this is only for purposes of clarity and ease of understanding by the reader. It will be appreciated that the terms rows and columns are used herein interchangeably. In this regard, the rows of an image frame as discussed herein may be viewed as columns, and vice versa. Moreover, although various techniques are discussed primarily in relation to row mean values and column mean values (e.g., averaged values), other types of row and column values such as row sum values and column sum values (e.g., total values) may be used instead where appropriate.

For multiple image frames captured of scene 170, row and column noise may be represented by frame-to-frame offsets in the mean pixel values of each row or column. In this regard, for a given image frame, a row mean value may be determined by summing all pixel values of a row and dividing the sum by the number of pixels in the row. Column mean values may be determined in a similar manner. Row and column mean values may also be calculated for corresponding rows and columns of other (e.g., previously captured) image frames.

If the scene being imaged is completely static (e.g., assuming there is no movement in the scene and the imaging device remains fixed relative to the scene), then temporal row noise may be effectively eliminated by forcing the row mean values to be identical for each captured image frame. For example, if the image frames include rows of 640 pixels, and one of the row mean values determined for a newly captured image frame exhibits a value 1280 counts larger than a previously captured image frame, then it will be understood that the temporal row noise associated with the newly captured image frame is +2 counts (e.g., 1280 count increase over 640 pixel values). Thus, a row offset of -2 may be used to reduce the row noise. Similar techniques may be applied for column mean values to reduce column noise. Similar techniques may be applied to columns.

However, for non-static scenes, row and column mean values for given rows and columns in successive image frames may increase or decrease as a result of real changes in the imaged scene (e.g., actual scene content-not just noise). Therefore, it is also important that valid scene changes are not inadvertently filtered out as noise. The techniques disclosed herein may be used to discriminate between actual scene content and noise by selectively adjusting row and column offset values based on temporal noise determined through one or more spectral transforms.

Applying spectral transforms to row and column mean values has various advantages over conventional image noise reduction techniques. In this regard, when row and column mean values are viewed in the spatial domain (e.g., in a particular image) or in the temporal domain (e.g., varying from image to image), it can be difficult to ascertain the extent to which the variations are associated with noise or actual scene information. In accordance with various embodiments discussed herein, applying spectral transforms to row and column mean values can help distinguish noise from actual scene information.

For example, by performing first spectral transforms on row or column mean values of an image (e.g., first spectral transforms applied to a spatial domain), periodic signal content will be represented by first spectral coefficients. Depending on the nature of the periodic signal and the transforms (e.g. Discrete Cosine Transforms (DCT)) for the first spectral transforms, only a few spectral coefficients will have non-zero values. However, noise is generally not periodic (e.g., it is more random in nature) and spectral decomposition will, in general, result in all or most terms having non-zero values of low amplitude (relative to signal from actual scene content).

However, even if the first spectral transform coefficients associated with noise have similar magnitudes to those associated with scene information, second spectral transforms may be performed on the first spectral coefficients to further differentiate noise from scene information. In this regard, actual scene information will typically change differently over time (e.g., frame-to-frame) than changes associated with noise.

For example, noise is typically not tightly temporally correlated. As such, a periodic change or a gradual increase or decrease in row mean values (or first spectral coefficients calculated therefrom) over time is unlikely to be noise. In this regard, a first spectral coefficient with a magnitude lower than that associated with typical noise may not actually be noise if the first spectral coefficient exhibits only small changes frame-to-frame (e.g., in contrast to other first spectral coefficients associated with noise that may exhibit much more rapid frame-to-frame variations).

By applying second spectral transforms to the first spectral coefficients (e.g., second spectral transforms applied to a temporal domain), temporal (e.g., frame-to-frame) changes in the basis function components of the first spectral coefficients can be represented by the resulting second spectral coefficients. The resulting second spectral coefficients calculated from scene-based images can be compared to other coefficients calculated from pure noise-based images.

In this case, small and rapid frame-to-frame variations that are possibly also present and added to the gradual increase of a particular row or column mean value, would affect the second spectral coefficients associated with high temporal frequencies. By attenuating the second spectral coefficients that exhibit magnitudes similar to those determined from pure noise-based images, spatially correlated temporal noise may be reduced.

In various embodiments, techniques provided herein may be performed in a computationally efficient manner that operates on mean row and column values of image frames, rather than individual pixel values of the image frame as is more commonly performed in conventional image processing. For example, when applied to multiple image frames (e.g., 8 frames) having 512 rows and 640 columns each, the presently disclosed processing techniques may operate on a limited set of 512x8 row mean values and a limited set of 640x8 column mean values collectively corresponding to less than 10,000 discrete mean values (e.g., 512x8 + 640x8 = 9,216). In contrast, a conventional individual pixel-based processing approach for the same set of image frames would typically require processing of over two million discrete pixel values (e.g., 512x640x8 = 2,621,440). Thus, the mean value processing approach discussed herein requires significantly less memory than conventional pixel-based approaches (e.g., a reduction of over 99.4% in the number of stored values and corresponding to over 284 times fewer memory values).

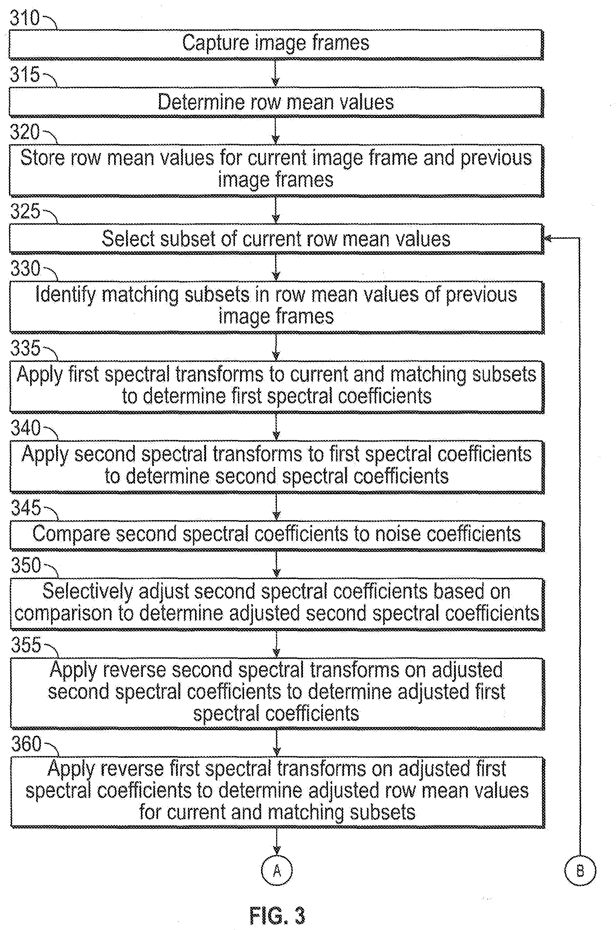

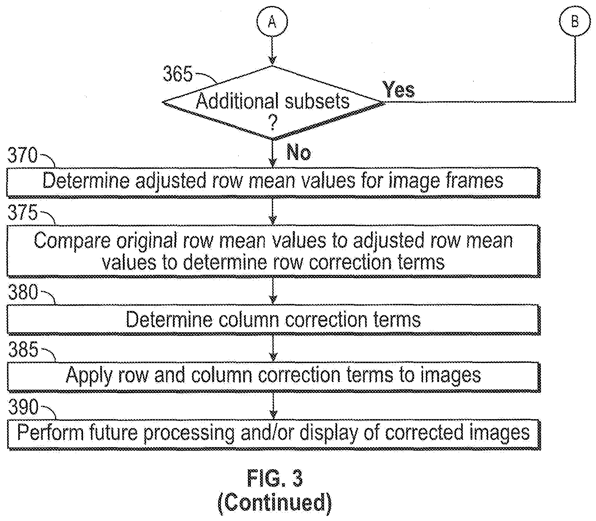

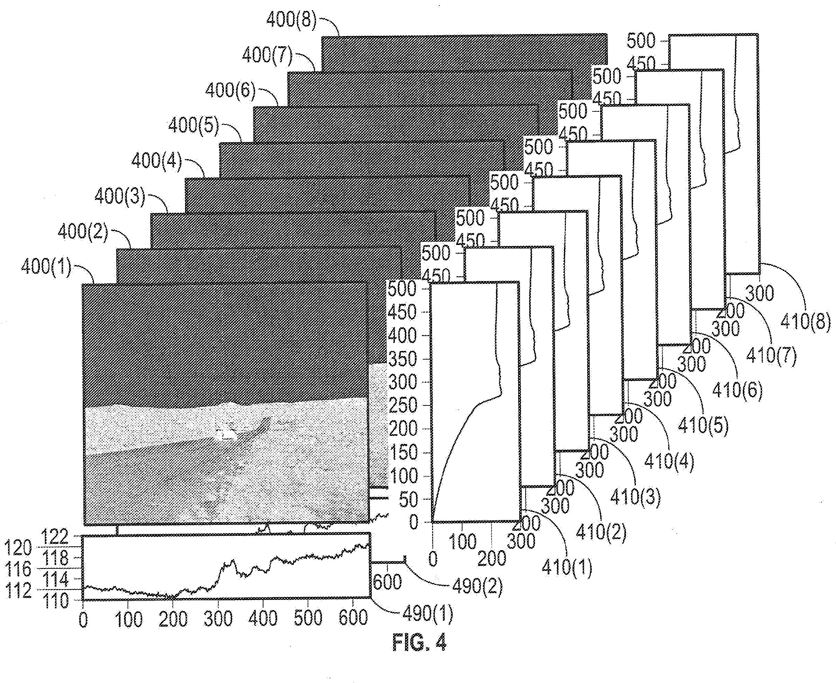

Fig. 3 illustrates a process of reducing row and column noise that may be performed by system 100 in accordance with an embodiment of the disclosure. In block 310, image capture component 130 begins capturing image frames of scene 170 that are provided to processing component 110 through interface component 136 and connection 137. Fig. 4 illustrates a set of eight sequential image frames 400(1)-(8) captured during block 310, with image frame 400(1) being the most recently captured, in accordance with an embodiment of the disclosure.

In this example, image frames 400(1)-(8) are thermal image frames with pixels arranged in 512 rows and 640 columns, however other image frame types (e.g., visible light images), image frame sizes, and numbers of image frames are also contemplated. In various embodiments, any desired number of image frames may be used, for example, at the cost of increased latency in the resulting processed image frames.

In block 315, processing component 110 determines row mean values 410(1)-(8) associated with captured image frames 400(1)-(8). In some embodiments, the row mean values 410 for a given image frame may be a set of the mean pixel values for all rows of the image frame. In this regard, the pixel values of each row may be averaged to determine a mean value for each row. Thus, for an image frame having 512 rows, 512 row mean values are calculated. In some embodiments, the row mean values are the average of all pixels in a given row. In other embodiments, the row mean values may be based on only a portion of the pixels of a given row (e.g., pixels selected at desired intervals).

In Fig. 4, sets of row mean values 410(1)-(8) (e.g., also referred to as row vectors) are illustrated to the right of image frames 400(1)-(8). Also in Fig. 4, sets of column mean values 490(1)-(2) (e.g., also referred to as column vectors) are illustrated below image frames 400(1)-(2) which may be used in the processing performed in block 380 further discussed herein (e.g., for purposes of clarity, column mean values 490(3)-(8) for image frames 400(3)-(8) are not shown in Fig. 4).

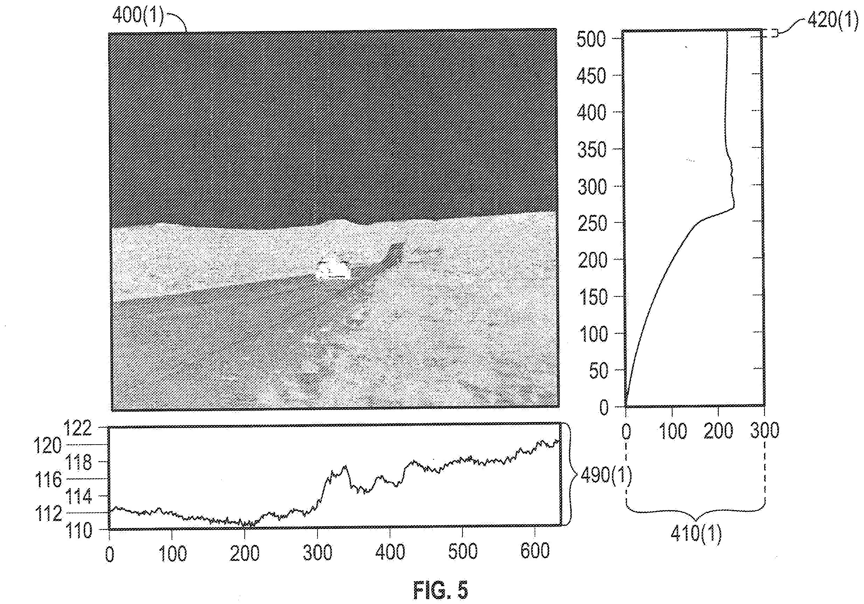

Fig. 5 illustrates further details of image frame 400(1), its corresponding row mean values 410(1), and its corresponding column mean values 490(1) in further detail in accordance with an embodiment of the disclosure. In the example of Fig. 5, row mean values 410(1) range from approximately 0 counts to approximately 220 counts. Column mean values 490(1) range from approximately 110 counts to approximately 120 counts.

Upon inspection, it will be appreciated that row mean values 410(1) effectively provide a waveform with a changing amplitude that varies over the rows (e.g., row-to-row changes in mean pixel values are shown as a projection along the row axis of image frame 400(1)). Similarly, column mean values 490(1) effectively provide another waveform with a changing amplitude that varies over the columns (e.g., column-to-column changes in mean pixel values are shown as a projection along the column axis of image frame 400(1)). As further discussed herein, spectral transforms may be applied to the waveforms provided by row mean values 410(1)-(8) and column mean values 490(1)-(8) as part of noise reduction processing.

In block 320, processing component 110 stores the row mean values 410(1)-(8) calculated for image frames 400(1)-(8) in memory component 120 (e.g., in a first-in first-out (FIFO) queue or other appropriate data structure).

As further discussed below, in blocks 325 to 365, processing component 110 performs an iterative process in which selected subsets of the row mean values 410(1)-(8) of image frames 400(1)-(8) are processed to determine adjusted row mean values that effectively reduce spatially correlated temporal row noise from image frames 400(1) to 400(8).

In block 325, processing component 110 selects a first subset of row mean values 410(1). For example, as shown in Fig. 5, a subset 420(1) of row mean values 410(1) corresponds to the row mean values for the topmost eight rows of image frame 400(1).

In block 330, processing component 110 identifies matching subsets 420(2)-(8) in row mean values 410(2)-(8) of image frames 400(2)-(8). In this regard, processing component 110 may apply appropriate matching processes to determine subsets of row mean values 410(2)-(8) with values and/or patterns that are identical to, or substantially similar to, subset 420(1). For example, in some embodiments, matching techniques may be used as provided by U.S. Patent No. 8,306,275 issued November 6, 2012.

In the case of a static scene 170 (e.g., no movement in scene 170 and image capture component 130 remains fixed relative to scene 170), then the matching subsets of row mean values 410(2)-(8) may correspond to the same topmost eight rows of image frames 410(2)-(8).

However, in the case of a non-static scene 170 (e.g., scene 170 exhibits movement and/or image capture component 130 is moved (e.g., translated) relative to scene 170 while image frames 400(1)-(8) are captured during block 310), the matched subsets of row mean values 410(2)-(8) may correspond to different locations among the rows of image frames 410(2)-(8) to compensate for motion in scene 170 and/or motion of image capture component 130.

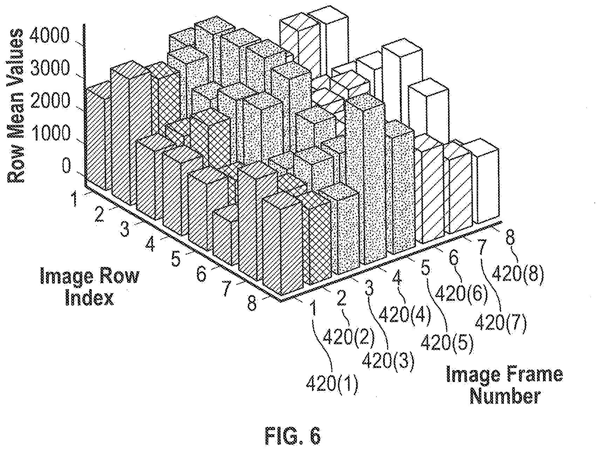

Fig. 6 illustrates subsets 420(1)-(8) of row mean values 410(1)-(8) in accordance with an embodiment of the disclosure. As shown, each of subsets 420(1)-(8) includes eight row mean values. Thus, each individual row mean value in Fig. 6 corresponds to an individual row (denoted by row index) for a particular one of subsets 420(1)-(8). As also shown, each of subsets 420(1)-(8) effectively provides a waveform that extends in the direction of the row index. As such, spectral transforms may be applied to these waveforms.

In block 335, processing component 110 applies first spectral transforms to each of subsets 420(1)-(8) to determine a corresponding set of first spectral coefficients for each subset. In this regard, the first spectral transforms may be applied spatially to rows (e.g., row mean values). In various embodiments, different types of spectral transforms may be used including, for example, Fast Fourier Transforms (FFT), DCT, wavelet transforms, and/or others.

The first spectral transforms performed in block 335 effectively decompose the waveforms provided by the row mean values of each of subsets 420(1)-(8) shown in Fig. 6 into a set of basis function components (e.g., frequency components for appropriate spectral transforms such as FFT and DCT). The first spectral coefficients identify the contribution of the various basis function components that make up the waveforms.

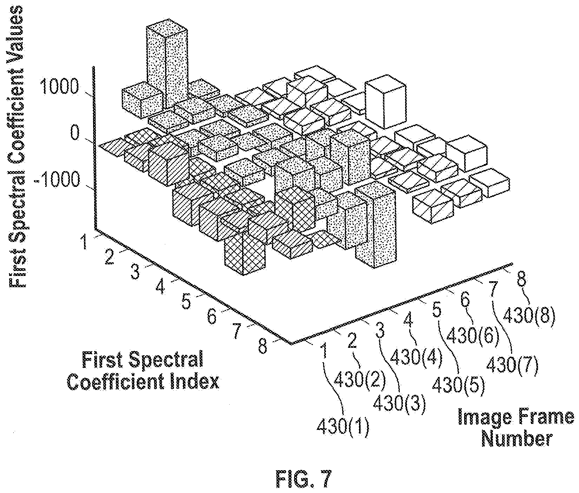

Fig. 7 illustrates eight sets of first spectral coefficients 430(1)-(8) that result from performing the first spectral transforms on subsets 420(1)-(8) (denoted by frame number in Fig. 7) in accordance with an embodiment of the disclosure. In the example shown in Fig. 7, eight basis function components are used which result in eight first spectral coefficients (denoted by coefficient index) for each set of first spectral coefficients 430(1)-430(8).

The various first spectral coefficient values correspond to the frequency contributions associated with the waveform shapes of subsets 420(1)-(8). Thus, the resulting sets 430(1)-(8) of first spectral coefficients represent the frame-to-frame changes in various basis function components associated with subsets 420(1)-(8).

Because the same first spectral transforms are applied to all of subsets 420(1)-(8), the first spectral coefficients of sets 430(1)-(8) sharing the same coefficient index will correspond to the same frequency component. In this example, the first spectral coefficients having a coefficient index of 1 correspond to a DC component (e.g., corresponding to the mean of row sums), while the remaining first spectral coefficients having coefficient indexes of 2 through 8 correspond to the contribution of various basis function components. Although eight first spectral coefficients are determined for each of the eight subsets 420(1)-(8) (e.g., providing 64 first spectral coefficients in total), the first spectral transforms may be adjusted to provide greater or fewer numbers of first spectral coefficients as desired.

As also shown in Fig. 7, the first spectral coefficient values for a given coefficient index effectively map out another waveform for each coefficient index (e.g., each frequency component determined by the first spectral transforms) that extends in the direction of the frame number. Thus, the first spectral coefficient values effectively provide a set of eight waveforms extending in the temporal direction, with each waveform corresponding to the frame-to-frame changes in the first spectral coefficients for a given frequency component. As further discussed herein, additional spectral transforms may be applied to these waveforms provided by the first spectral coefficients.

In block 340, processing component 110 applies second spectral transforms to the first spectral coefficients. In particular, a corresponding second spectral transform may be applied to each coefficient index to determine a corresponding set of second spectral coefficients for each coefficient index. In this regard, the second spectral transforms may be applied temporally to the first spectral coefficients (e.g., applied to first spectral coefficients associated with a particular frequency component over different image frames captured at different times). The second spectral transforms may be implemented as any of the various types discussed with regard to the first spectral transforms, and different spectral transforms may be used in blocks 335 and 340 as desired.

The second spectral transforms performed in block 340 effectively decompose the waveforms provided by the first spectral coefficients for each coefficient index into another set of basis function components (e.g., frequency components for appropriate spectral transforms such as FFT and DCT). The second spectral coefficients identify the contribution of another set of basis function components that make up the first spectral coefficient index waveforms and identify the frame-to-frame changes of the first spectral coefficients.

Thus, the second spectral transforms are effectively applied to the first spectral coefficients in a temporal (e.g., time) direction (e.g., in the direction of frame numbers identified in Fig. 7 corresponding to different image frames captured over a period of time). By applying the second spectral transform to the first spectral coefficients as discussed, the second set of spectral coefficients represent the contributions of a second set of basis function components associated with frame-to-frame changes in the first spectral coefficients.

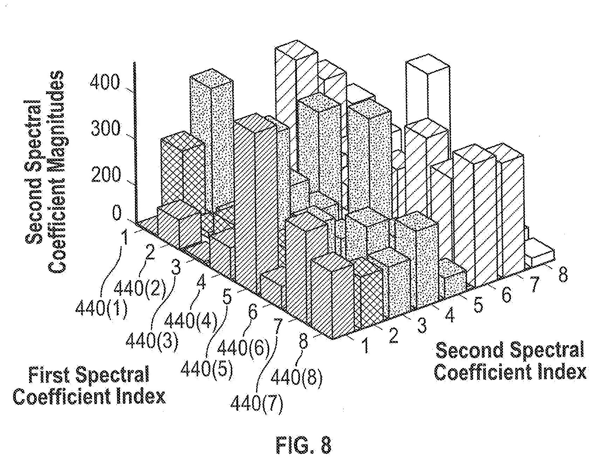

Fig. 8 illustrates the magnitudes (e.g., absolute values) of eight sets of second spectral coefficients 440(1)-(8) which are provided by performing the second spectral transforms on corresponding sets of first spectral coefficients 430(1)-(8) in accordance with an embodiment of the disclosure. In the example shown in Fig. 8, eight basis function components are used which result in eight second spectral coefficients (denoted by second coefficient index) for each set of second spectral coefficients 440(1)-(8). Although eight second spectral coefficients are determined for each set of first spectral coefficients 430(1)-(8) (e.g., providing 64 second spectral coefficients in total), the second spectral transforms may be adjusted to provide greater or fewer numbers of second spectral coefficients as desired.

In view of the above discussion, it will be appreciated that first spectral coefficients 430(1)-(8) represent changes in the contributions of a first set of basis function components on row subsets 420(1)-(8) (e.g., how the row subsets change over a period of eight image frames as determined by the first set of basis function components). It will also be appreciated that second spectral coefficients 440(1)-(8) represent changes in the contributions of a second set of basis function components on first spectral coefficients 430(1)-(8) (e.g., how the individual first basis function components measured by the first spectral coefficients are themselves changing over time).

Accordingly, second spectral coefficients 440(1)-(8) represent the frame-to-frame changes exhibited by the currently processed subsets 420(1)-(8) of row mean values 410(1)-(8) (e.g., a representation of the flickering exhibited by the currently processed subsets 420(1)-(8) over image frames 400(1)-(8)).

Thus, by comparing second spectral coefficients 440(1)-(8) (calculated from image frames 400(1)-(8) captured of scene 170) with noise spectral coefficients (calculated from another set of image frames that contain only temporal noise and no scene information), processing component 110 can determine portions of the second spectral coefficients 440(1)-(8) that are associated with noise, and portions that are associated with valid scene information.

In block 345, processing component 110 compares second spectral coefficients 440(1)-(8) with noise coefficients. In this regard, blocks 310 to 340 may be performed on another set of image frames captured by image capture component 130 while facing a known flat field target (e.g., a known black body source in the case of thermal image frames). As such, noise coefficients may be determined for the known flat field image frames in the manner discussed herein with regard to second spectral coefficients 440(1)-(8) for scene-based image frames 400(1)-(8). Because there is no actual scene information present in the flat field image frames, the noise coefficients will be associated with pure noise (e.g., spatially correlated temporal row and column noise exhibited by system 100). As such, the noise coefficients will identify the frame-to-frame changes in basis function components associated with pure noise (e.g., no scene information). As a result, the noise coefficients may be used as threshold values to identify noise contributions in second spectral coefficients 440(1)-(8). In some embodiments, the noise coefficients may be calculated by averaging and/or weighting many thousands of individual noise coefficient estimates based on numerous flat field images of pure noise with no actual scene information.

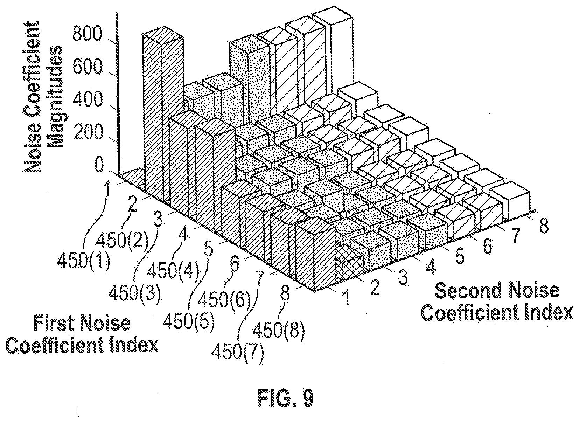

Fig. 9 illustrates the magnitudes (e.g., absolute values) of eight sets of noise coefficients 450(1)-(8) determined by performing the operations of blocks 310 to 340 on a set of flat field images in accordance with an embodiment of the disclosure. Similar to second spectral coefficients 440(1)-(8), eight basis function components are used which result in eight noise coefficients (denoted by second coefficient index) for each set of noise coefficients 450(1)-(8). Again, although 64 total noise coefficients are provided, the spectral transforms may be adjusted to provide greater or fewer numbers of noise coefficients as desired.

In block 345, magnitudes of second spectral coefficients 440(1)-(8) are compared with magnitudes of noise coefficients 450(1)-(8). For example, in cases where particular ones of the second spectral coefficients 440(1)-(8) have magnitudes greater than those of corresponding noise coefficients 450(1)-(8), it can be interpreted that the second spectral coefficients 440(1)-(8) are associated with real scene changes (e.g., frame-to-frame changes in the frequency contributions of first spectral coefficients 430(1)-(8) represented by second spectral coefficients 440(1)-(8) are due to actual changes in the imaged scene-not noise).

However, in other cases where particular ones of the second spectral coefficients 440(1)-(8) have magnitudes approximately equal to or less than those of corresponding noise coefficients 450(1)-(8), it can be interpreted that the second spectral coefficients 440(1)-(8) are associated with noise (e.g., frame-to-frame changes in the frequency contributions of the first spectral coefficients 430(1)-(8) represented by the second spectral coefficients 440(1)-(8) are due to changes that occur near or below the noise floor). In such cases, the corresponding ones of the second spectral coefficients 440(1)-(8) may be adjusted (e.g., reduced in magnitude) to effectively reduce the temporal noise in image frames 400(1)-(8).

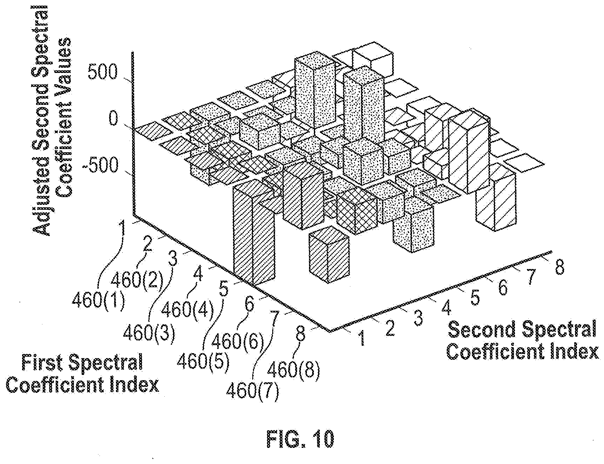

In block 350, processing component 110 selectively adjusts one or more of the second spectral coefficients 440(1)-(8) based on the comparison performed in block 345. Fig. 10 illustrates adjusted second spectral coefficients 460(1)-(8) following the adjustment performed in block 350 in accordance with an embodiment of the disclosure. In this example, the original second spectral coefficients 440(1)-(8) with magnitudes that exceed those of noise coefficients 450(1)-(8) have not been changed, while those with magnitudes at or below have been reduced (e.g., set to zero and/or reduced by the corresponding magnitude of the noise). As a result, the adjusted second spectral coefficients 460(1)-(8) will have effectively filtered out temporal noise present in image frames 400(1)-(8).

For example, in some embodiments, temporal row and/or column noise may be represented by a small number of basis function components (e.g., one or two) that are typically at higher frequencies than scene-based basis function components. In this regard, scene-based changes typically occur at lower spatial frequencies (e.g., changing more than one row or column at a time) and lower temporal frequencies (e.g., lasting for several image frames) than temporal noise-based basis function components. By attenuating only spectral coefficients associated with the noise-based basis function components, temporal noise may be targeted and reduced without inadvertently affecting real scene data associated with other basis function components (e.g., scene-based basis function components may exhibit coefficients with magnitudes greater than the noise coefficients and therefore will not be inadvertently reduced by the techniques discussed herein).

In block 355, processing component 110 performs reverse second spectral transforms on the adjusted second spectral coefficients 460(1)-(8) to provide adjusted first spectral coefficients.

In block 360, processing component 110 performs reverse first spectral transforms on the adjusted first spectral coefficients to provide adjusted row mean values 480(1)-(8) for subsets 420(1)-(8).

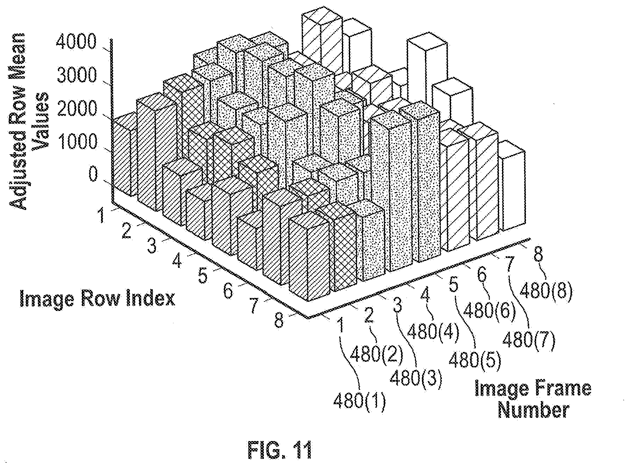

Fig. 11 illustrates adjusted row mean values 480(1)-(8) for subsets 420(1)-(8) in accordance with an embodiment of the disclosure. By comparing the original row mean values 410(1)-(8) of Fig. 6 with the adjusted row mean values 480(1)-(8) of Fig. 11, it will be appreciated that selected ones of the row mean values have been decreased to effectively remove temporal noise. Thus, following block 360, adjusted row mean values 480(1)-(8) will have been determined for subsets 420(1)-(8) of image frames 400(1)-(8).

As discussed, blocks 325 to 360 have been performed in relation to selected subsets 420(1)-(8) to determine adjusted row mean values 480(1)-(8) of image frames 400(1)-(8). Blocks 325 to 360 may be repeated for additional subsets until adjusted row mean values have been determined for all rows of images 400(1)-(8). Therefore, if additional subsets (e.g., additional rows to be processed) remain, then the process of Fig. 3 returns to block 325 where another subset is selected. Otherwise, the process continues to block 370.

Regarding the selection of another subset in block 325, this may be performed in various ways. In some embodiments, subset 420(1) of image frame 400(1) may be advanced by one row to select a new overlapping subset. For example, if the original subset 420(1) selected in the first iteration of block 325 corresponds to rows 1 to 8 of image frame 400(1), then the second iteration may correspond to rows 2 to 9, thus resulting in an overlap of rows 2 to 8 between the first and second iterations. Additional iterations may be performed until all rows have been considered. Other overlap amounts or no overlap may be used in other embodiments.

It will be appreciated that the overlapping rows in successive subsets permits multiple adjusted row mean values to be determined for each row (e.g., seven values for each row using the one row advancement approach discussed above for subsets of eight rows-excluding the topmost and bottommost rows). As a result, in block 370, processing component 110 determines a further adjusted row mean value for each row. In various embodiments, the further adjusted row mean values may be determined by averaging, weighting, and/or otherwise combining the various adjusted row mean values determined from overlapping subsets. For example, in some embodiments, adjusted row mean values may be more heavily weighted when they are associated with rows that were at or near the middle of a subset.

Thus, following block 370, adjusted row mean values 480(1)-(8) may be determined for corresponding image frames 400(1)-(8). The adjusted row mean values 480(1)-(8) correspond to row mean values that would be exhibited by image frames 400(1)-(8) with temporal noise removed. As discussed, the adjusted row mean values determined by the process of Fig. 3 also account for real scene changes such that actual scene information that is above the temporal noise floor is effectively retained and is not filtered out.

In block 375, processing component 110 compares original row mean values 410(1)-(8) with adjusted row mean values 480(1)-(8). Based on this comparison, a row correction term (e.g., row noise correction term) is determined for each row of each of image frames 400(1)-(8). For example, in some embodiments, a row correction term for a given row of a given image frame may be determined by the difference between the original row mean value associated with the row and the adjusted row mean value associated with the row.

In block 380, blocks 315 to 375 are performed for columns of image frames 400(1)-(8). In this regard, first and second spectral transforms may be applied to subsets of column mean values 490(1)-(8) to determine appropriate spectral coefficients that are compared to corresponding noise coefficients to determine adjusted column mean values. The adjusted column mean values are used to determine column correction terms (e.g., column noise correction terms) for each column of each of image frames 400(1)-(8). As such, it will be appreciated that block 380 may encompass the various operations of blocks 315 to 375, but applied to columns. Thus, following block 380, row and column correction terms will be determined for each row and column of each of image frames 400(1)-(8).

In block 385, processing component 100 applies the row and column correction terms to image frames 400(1)-(8) to provide corresponding corrected (e.g., processed) image frames with reduced temporal noise.

In block 390, further processing may be performed and/or the corrected image frames may be displayed to a user (e.g., on display component 140) as desired. For example, in some embodiments, temporal smoothing may be performed by averaging and/or otherwise weighting adjusted row and column mean values determined for multiple image frames.

Following block 390, the process of Fig. 3 may repeat as additional image frames are captured and processed. In some embodiments, a new set of image frames may be captured and processed together in the manner discussed above with regard to Fig. 3. In some embodiments, the process of Fig. 3 is repeated with overlapping image frames such that one or more of the previously processed image frames may be included in a new set of image frames (e.g., a sliding set of image frames may be used with a new image frame added and the oldest image frame dropped in each iteration of Fig. 3).

Other variations are also contemplated. For example, although the first and second spectral transforms of blocks 335 and 340 have been described as spatial and temporal transforms, respectively, this can be reversed if desired. In this regard, the first spectral transforms can be applied in a temporal direction to provide first spectral coefficients associated with frame-to-frame variations in row or column mean values. Similarly, the second spectral transforms can be applied in a spatial direction to provide second spectral coefficients associated with the row-to-row (or column-to-column) changes in the first spectral coefficients.

Where applicable, various embodiments provided by the present disclosure can be implemented using hardware, software, or combinations of hardware and software. Also where applicable, the various hardware components and/or software components set forth herein can be combined into composite components comprising software, hardware, and/or both. Where applicable, the various hardware components and/or software components set forth herein can be separated into sub-components comprising software, hardware, or both. In addition, where applicable, it is contemplated that software components can be implemented as hardware components, and vice-versa.

Software in accordance with the present disclosure, such as program code and/or data, can be stored on one or more computer readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

## Claims

1. A computer implemented method for reducing spatially correlated temporal noise, the method comprising:
receiving (310) a set of sequential image frames (400);
determining (315) row values for the image frames (400) comprising scene information and noise information, wherein the row values are row mean values (410) or row sum values;
performing (335) first spectral transforms in a first domain on corresponding subsets (420) of the row values to determine first spectral coefficients (430), wherein the first domain is a spatial domain;
performing (340) second spectral transforms in a second domain on corresponding subsets of the first spectral coefficients to determine second spectral coefficients (440), wherein the second domain is a temporal domain;
comparing (345) the second spectral coefficients (440) with noise spectral coefficients (450) calculated from other image frames comprising only noise information;
adjusting (350) the second spectral coefficients (440) that have magnitudes equal to or lower than those of corresponding noise coefficients (450) to generate adjusted second spectral coefficients (460);
performing (355) reverse second spectral transforms in the second domain on corresponding subsets of the adjusted second spectral coefficients (460) to determine adjusted first spectral coefficients;
performing (360) reverse first spectral transforms in the first domain on corresponding subsets of the adjusted first spectral coefficients to determine adjusted row values (480);
comparing (375) the original row values with the adjusted row values and determining row correction terms for the rows in the image frames (400);
repeating (380) the previous steps (315) to (375) for the columns of said image frames (400) in order to obtain column correction terms for the columns in the image frames (400); and
applying (385) the row and column correction terms to image frames (400) to reduce the noise of the image frames.

2. The method of claim 1, further comprising:
determining a plurality of adjusted row values for each row; and
wherein the row correction terms are further based on a weighted average of the adjusted row values.

3. The method of claim 1, further comprising:
identifying (330) matching subsets of the row values in the image frames; and
wherein the first spectral transforms are applied to the matching subsets to compensate for motion in a scene and/or motion of an image capture component.

4. The method of claim 1, wherein:
the first domain is taken along the row values associated with individual ones of the image frames; and
the second domain is taken along corresponding ones of the first spectral coefficients associated with different ones of the image frames.

5. The method of claim 1, further comprising:
capturing (310) the image frames from a real world scene;
wherein the image frames are thermal image frames.

6. A system for reducing noise, the system comprising:
a memory (120) component storing machine-executable instructions; and
a processor (110) configured to execute the instructions to cause the system to perform the steps of any one of claims 1 to 5.

## Patentansprüche

1. Ein computerimplementiertes Verfahren zum Reduzieren räumlich korrelierten zeitlichen Rauschens, wobei das Verfahren Folgendes beinhaltet:
Empfangen (310) eines Satzes sequenzieller Einzelbilder (400);
Bestimmen (315) von Zeilenwerten für die Einzelbilder (400), die Szeneninformationen und Rauschinformationen beinhalten, wobei die Zeilenwerte Zeilenmittelwerte (410) oder Zeilensummenwerte sind;
Durchführen (335) erster spektraler Transformationen in einer ersten Domäne an entsprechenden Teilsätzen (420) der Zeilenwerte, um erste spektrale Koeffizienten (430) zu bestimmen, wobei die erste Domäne eine räumliche Domäne ist;
Durchführen (340) zweiter spektraler Transformationen in einer zweiten Domäne an entsprechenden Teilsätzen der ersten spektralen Koeffizienten, um zweite spektrale Koeffizienten (440) zu bestimmen, wobei die zweite Domäne eine zeitliche Domäne ist;
Vergleichen (345) der zweiten spektralen Koeffizienten (440) mit spektralen Rauschkoeffizienten (450), die aus anderen Einzelbildern, die lediglich Rauschinformationen beinhalten, berechnet werden;
Anpassen (350) der zweiten spektralen Koeffizienten (440), die gleiche oder geringere Größen als die von entsprechenden Rauschkoeffizienten (450) aufweisen, um angepasste zweite spektrale Koeffizienten (460) zu erzeugen;
Durchführen (355) von zweiten spektralen Rücktransformationen in der zweiten Domäne an entsprechenden Teilsätzen der angepassten zweiten spektralen Koeffizienten (460), um angepasste erste spektrale Koeffizienten zu bestimmen;
Durchführen (360) von ersten spektralen Rücktransformationen in der ersten Domäne an entsprechenden Teilsätzen der angepassten ersten spektralen Koeffizienten, um angepasste Zeilenwerte (480) zu bestimmen;
Vergleichen (375) der ursprünglichen Zeilenwerte mit den angepassten Zeilenwerten und Bestimmen von Zeilenkorrekturtermen für die Zeilen in den Einzelbildern (400);
Wiederholen (380) der vorhergehenden Schritte (315) bis (375) für die Spalten der Einzelbilder (400), um Spaltenkorrekturterme für die Spalten in den Einzelbildern (400) zu erhalten; und
Anwenden (385) der Zeilen- und Spaltenkorrekturterme auf Einzelbilder (400), um das Rauschen der Einzelbilder zu reduzieren.

2. Verfahren gemäß Anspruch 1, das ferner Folgendes beinhaltet:
Bestimmen einer Vielzahl von angepassten Zeilenwerten für jede Zeile; und
wobei die Zeilenkorrekturterme ferner auf einem gewichteten Durchschnitt der angepassten Zeilenwerte basieren.

3. Verfahren gemäß Anspruch 1, das ferner Folgendes beinhaltet:
Identifizieren (330) von übereinstimmenden Teilsätzen der Zeilenwerte in den Einzelbildern; und
wobei die ersten spektralen Transformationen auf die übereinstimmenden Teilsätze angewandt werden, um die Bewegung in einer Szene und/oder die Bewegung einer Bilderfassungskomponente zu kompensieren.

4. Verfahren gemäß Anspruch 1, wobei:
die erste Domäne entlang den Zeilenwerten, die mit individuellen der Einzelbilder assoziiert sind, genommen wird; und
die zweite Domäne entlang entsprechenden der ersten spektralen Koeffizienten, die mit unterschiedlichen der Einzelbilder assoziiert sind, genommen wird.

5. Verfahren gemäß Anspruch 1, das ferner Folgendes beinhaltet:
Erfassen (310) der Einzelbilder von einer Szene der realen Welt;
wobei die Einzelbilder Wärmeeinzelbilder sind.

6. Ein System zum Reduzieren von Rauschen, wobei das System Folgendes beinhaltet:
eine Speicher(120)-Komponente, die maschinenausführbare Anweisungen speichert; und
einen Prozessor (110), der konfiguriert ist, um die Anweisungen auszuführen, um das System dazu zu veranlassen, die Schritte gemäß einem der Ansprüche 1 bis 5 durchzuführen.

## Revendications

1. Un procédé mis en oeuvre par ordinateur servant à réduire le bruit temporel à corrélation spatiale, le procédé comprenant le fait :
de recevoir (310) un ensemble de trames d'images séquentielles (400) ;
de déterminer (315) des valeurs de lignes pour les trames d'images (400) comprenant des informations relatives à la scène et des informations relatives au bruit, les valeurs de lignes étant des valeurs de moyenne de lignes (410) ou des valeurs de somme de lignes ;
de réaliser (335) des premières transformées spectrales dans un premier domaine sur des sous-ensembles correspondants (420) des valeurs de lignes afin de déterminer des premiers coefficients spectraux (430), le premier domaine étant un domaine spatial ;
de réaliser (340) des deuxièmes transformées spectrales dans un deuxième domaine sur des sous-ensembles correspondants des premiers coefficients spectraux afin de déterminer des deuxièmes coefficients spectraux (440), le deuxième domaine étant un domaine temporel ;
de comparer (345) les deuxièmes coefficients spectraux (440) à des coefficients spectraux de bruit (450) calculés à partir d'autres trames d'images ne comprenant que des informations relatives au bruit ;
d'ajuster (350) les deuxièmes coefficients spectraux (440) qui ont des amplitudes inférieures ou égales à celles de coefficients de bruit correspondants (450) afin de générer des deuxièmes coefficients spectraux ajustés (460) ;
de réaliser (355) des deuxièmes transformées spectrales inverses dans le deuxième domaine sur des sous-ensembles correspondants des deuxièmes coefficients spectraux ajustés (460) afin de déterminer des premiers coefficients spectraux ajustés ;
de réaliser (360) des premières transformées spectrales inverses dans le premier domaine sur des sous-ensembles correspondants des premiers coefficients spectraux ajustés afin de déterminer des valeurs de lignes ajustées (480) ;
de comparer (375) les valeurs de lignes originales aux valeurs de lignes ajustées et de déterminer des termes de correction de lignes pour les lignes dans les trames d'images (400) ;
de répéter (380) les étapes précédentes (315) à (375) pour les colonnes desdites trames d'images (400) dans le but d'obtenir des termes de correction de colonnes pour les colonnes dans les trames d'images (400) ; et
d'appliquer (385) les termes de correction de lignes et de colonnes à des trames d'images (400) afin de réduire le bruit des trames d'images.

2. Le procédé de la revendication 1, comprenant en outre le fait :
de déterminer une pluralité de valeurs de lignes ajustées pour chaque ligne ; et
dans lequel les termes de correction de lignes sont en outre basés sur une moyenne pondérée des valeurs de lignes ajustées.

3. Le procédé de la revendication 1, comprenant en outre le fait :
d'identifier (330) des sous-ensembles d'appariement des valeurs de lignes dans les trames d'images ; et
dans lequel les premières transformées spectrales sont appliquées aux sous-ensembles d'appariement afin de compenser un mouvement dans une scène et/ou un mouvement d'un composant de capture d'images.

4. Le procédé de la revendication 1, dans lequel :
le premier domaine est pris le long des valeurs de lignes associées à des trames d'images individuelles des trames d'images ; et
le deuxième domaine est pris le long de coefficients spectraux correspondants des premiers coefficients spectraux associés à des trames d'images différentes des trames d'images.

5. Le procédé de la revendication 1, comprenant en outre le fait :
de capturer (310) les trames d'images à partir d'une scène du monde réel ;
les trames d'images étant des trames d'images thermiques.

6. Un système servant à réduire le bruit, le système comprenant :
un composant de mémoire (120) stockant des instructions exécutables par machine ; et
un processeur (110) configuré pour exécuter les instructions afin d'amener le système à réaliser les étapes de l'une quelconque des revendications 1 à 5.
